# EUROPÄISCHE PATENTANMELDUNG

(11) **EP 0 969 562 A1**
(43) Veröffentlichungstag der Anmeldung: **05.01.2000**
(21) Anmeldenummer: 99110570.1
(22) Anmeldetag: 01.06.1999
(51) Int. Cl.: H01R 13/518

(54) **System zum Bereitstellen einer elektrischen Verbindung zum Übertragen von Daten und Komponenten dieses Systems**

(30) Priorität: 01.07.1998 DE 19829485
(71) Anmelder: SIEMENS AKTIENGESELLSCHAFT, 80333 München (DE)
(72) Erfinder: Dzyck, Wolfgang, 96484 Meeder (DE); Moeser, Harald, 80797 München (DE)

(57) **Zusammenfassung**

Die Erfindung betrifft ein System und dessen Komponenten zum Bereitstellen einer elektrischen Verbindung zum Übertragen von Daten mit einem Kabel, einer Steckdose, wobei ein Steckverbinder und sein Kabelanschlußbereich von einer elektromagnetischen Abschirmung allseitig umschlossen sind, wobei das Kabel im Kabelanschlußbereich der Steckdose mit dem Steckverbinder verbunden ist, einem weiteren Kabel (61) mit einem Gegensteckverbinder, der in den Steckverbinder der Steckdose eingesteckt ist, einem Patchpanel (1), das einen oder mehrere Steckverbinder (40) aufweist, wobei jedem der Steckverbinder (40) ein Kabelanschlußbereich (5) des Patchpanels (1) zugeordnet ist und wobei jeder der Steckverbinder (40) und sein Kabelanschlußbereich (5) von einer elektromagnetischen Abschirmung allseitig umschlossen ist, wobei Adern (62) des weiteren Kabels (61) mit einem der Steckverbinder (40) im Kabelanschlußbereich (5) des Patchpanels (1) verbunden ist oder ein zweiter Gegensteckverbinder des weiteren Kabels (61) in einen Steckverbinder (40) des Patchpanels (1) eingesteckt ist.

## Beschreibung

Die vorliegende Erfindung betrifft ein System zum Bereitstellen einer elektrischen Verbindung zum Übertragen von Daten, ein Patchpanel zum Verbinden von Kabeln, eine Steckdose und einen Steckverbinder, wobei diese gleichen Komponenten in dem System verwendet werden können.

Ein Patchpanel ist allgemein eine Verbindungseinrichtung, die bei der Verbindung bzw. Vernetzung von Endgeräten verwendet wird, um beispielsweise ein ankommendes Datenkabel mit mehreren abgehenden Datenkabeln zu verbinden. Um eine bestimmte Verbindung zwischen einem Endgerät beispielsweise einem Drucker und einem anderen Endgerät beispielsweise einem Personalcomputer festzulegen, kann am Patchpanel eine bestimmte Steckverbindung eingerichtet werden oder die Adern eines Kabels, beispielsweise von einer Wand-Datendose kommend, am Patchpanel aderweise beispielsweise mittels einer Klemm- oder Krimp-Kontaktierung bereitgestellt werden. Bei heutigen Verbindungssystemen mit Datenübertragungsraten von einigen 10 Megabit bis einigen 100 Megabit oder sogar Gigabit, also im Hochfrequenzbereich, ergeben sich an den Kontaktstellen beispielsweise am Patchpanel oder an der Wandsteckdose durch freiliegende Kabeladern und unsachgemäße Montage der Metallschirme der Kabel oder zu hohe Kontaktübergangswiderstände hohe elektomagnetische Hochfrequenzabstrahlungen, die Störungen in Geräten in räumlicher Nähe beispielsweise zum Patchpanel hervorrufen können. Außerdem kann es zu unerwünschten Übersprech-Einkopplungen in benachbarte Kabelanschlußbereiche am Patchpanel kommen, was wiederum zu Störungen der über das Patchpanel übertragenen Datensignale und damit zu einer Verminderung der Reichweite der Datenübertragung in dem gestörten Kabel führen kann.

Aufgabe der vorliegenden Erfindung ist es, ein Verbindungssystem mit Patchpanel anzugeben, bei dem die oben erläuterten Störungen aufgrund von elektromagnetischer Hochfrequenz-Abstrahlung an den Verbindungseinrichtungen des Systems zumindest stark reduziert werden.

Diese Aufgabe wird durch das System zum Bereitstellen einer elektrischen Verbindung zum Übertragen von Daten gemäß Anspruch 26 bzw. durch das Patchpanel gemäß Anspruch 1, die Steckdose gemäß Anspruch 11 und den Steckverbinder gemäß Anspruch 21 gelöst.

Demnach hat das erfindungsgemäße Patchpanel zum Verbinden von Kabeln, insbesondere von Daten-Kabeln, eine Vorderseite, eine Rückseite, mehrere Öffnungen und einen oder mehrere Steckverbinder, die jeweils über eine der Öffnungen von der Vorderseite des Patchpanels her zugänglich am Patchpanel zum Einstecken eines Gegensteckverbinders befestigt sind, wobei jedem der Steckverbinder ein Kabelanschlußbereich an der Rückseite des Patchpanels zugeordnet ist und wobei jeder der Steckverbinder und sein Kabelanschlußbereich von einer elektromagnetischen Abschirmung, insbesondere an der Rückseite des Patchpanels, allseitig umschlossen ist.

Das erfindungsgemäße Patchpanel hat den erheblichen Vorteil, daß durch die elektromagnetische, allseitige Abschirmung des jeweiligen Steckverbinders bzw. seines Steckverbinderplatzes und seines jeweils zugehörigen Kabelanschlußbereichs eine elektromagnetische Abstrahlung, insbesondere von hochfrequenter Energie, an den offen liegenden Kabeladern und Kontakten im Kabelanschlußbereich und im Steckverbinderbereich sicher abgefangen bzw. abgeschirmt wird. Aufgrund der durch die Abschirmung erreichten Trennung zu benachbarten Kabelanschluß- und Steckverbinderbereichen wird eine störende Übersprecheinkopplung in benachbarte Kabel, Kabelanschlußbereiche, Kontakte und Steckverbinder vermieden oder doch zumindest stark unterdrückt. Das hat wiederum zur Folge, daß die elektrischen Signale in Kabeln am Patchpanel störfreier sind und damit über eine weite bzw. weitere Strecke übertragen werden können, als es im Stand der Technik der Fall war. Die vorteilhafte Abschirmung des erfindungsgemäßen Patchpanels ermöglicht weiterhin eine Unterdrückung von elektromagnetischer Abstrahlung in die räumliche Umgebung des Patchpanels, wodurch Störungen von Geräten in der Umgebung des Patchpanels vermieden werden.

Die Abschirmung hat bevorzugt eine oder mehrere einzelne Abschirmkappen, die jeweils einen Steckverbinder und seinen zugehörigen Kabelanschlußbereich umschließen, wodurch eine modulare Bestückung des Patchpanels ermöglicht wird.

In jeder Öffnung des erfindungsgemäßen Patchpanels ist vorzugsweise ein Einsatz angeordnet, in dem jeweils ein Steckverbinder des Patchpanels einsetzbar ist, wobei der Einsatz innerhalb der Abschirmung angeordnet ist. Der Einsatz ermöglicht eine exakte Zentrierung, Halterung und Isolierung, wenn ein Kunststoffeinsatz verwendet wird, und formschlüssige Anordnung eines Steckverbinders am Patchpanel. Weiterhin trägt der Einsatz zur modularen Bestückbarkeit des Patchpanels bei.

Jeder der Steckverbinder ist vorzugsweise durch eine Einrastverbindung im Einsatz festgehalten, wodurch eine Steckbarkeit des Steckverbinders am Patchpanel ermöglicht wird.

Das Patchpanel hat bevorzugt ein Winkel-Blechteil mit einem vertikal sich an der Vorderseite des Patchpanels erstreckenden Frontteil und einem horizontal sich an der Rückseite des Patchpanels erstreckenden Basisteil, wobei die Öffnungen im Frontteil ausgebildet sind und das Winkel-Blechteil einen Teil der Abschirmung bildet. Das Winkel-Blechteil ermöglicht zusammen mit den einzelnen Abschirmkappen eine wirkungsvolle Abschirmung, insbesondere im Hochfrequenzbereich.

Zwischen dem Frontteil und dem Basisteil ist bevorzugt ein Verstärkungsteil an der Rückseite des Patchpanels vorgesehen. Das Verstärkungsteil ermöglicht eine Stabilisierung des relativ langgestreckten Winkel-Blechteils und stellt weiterhin eine zusätzliche Fläche für die Abschirmkontaktierung bereit.

An dem Winkel-Blechteil kann eine Frontplatte befestigt sein, die die Steckverbinder am Winkel-Blechteil festhält oder zusätzlich arretiert. Die Frontplatte ermöglicht einen Anpreßdruck auf den Steckverbinder im Patchpanel, wodurch eine sichere Kontaktierung eines Schirmblechs des Steckverbinders mit dem Winkel-Blechteil realisiert wird.

Die Frontplatte ist vorzugsweise mittels einer Rastverbindung am Winkel-Blechteil befestigt, wodurch eine leichte Anbringung und Entfernung der Frontplatte von dem Winkel-Blechteil ermöglicht wird. Weiterhin stellt die Rastverbindung einen sicheren Anpreßdruck entlang der gesamten Vorderseite des Winkel-Blechteils auf die Steckverbinder sicher.

Das erfindungsgemäße Patchpanel hat an der Rückseite bevorzugt mindestens einen Kabelträger als Auflager für ein Kabel, wodurch ein unerwünschtes Abknicken des Kabels, insbesondere im Kabelanschlußbereich, vermieden wird, was ansonsten zu einer erhöhten Dämpfung oder Beschädigung von Kabeladern oder auch des Metallschirms des Kabels führen kann.

Vorzugsweise hat der Steckverbinder mindestens eine Steckerbuchse zur Aufnahme eines Steckers an der Vorderseite des Patchpanels und eine Klemmleiste an der Rückseite des Patchpanels zum Befestigen der Adern eines Kabels im Kabelanschlußbereich.

Die erfindungsgemäße Steckdose (siehe Anspruch 11) hat mindestens einen Steckverbinder, der durch eine Öffnung an einer Vorderseite der Steckdose zugänglich in der Steckdose zum Einstecken eines Gegensteckverbinders befestigt ist, wobei im Innern der Steckdose ein Kabelanschlußbereich vorgesehen ist und wobei der Steckverbinder und der Kabelanschlußbereich von einer elektromagnetischen Abschirmung allseitig umschlossen ist.

Die erfindungsgemäße Steckdose hat den Vorteil, daß durch die elektromagnetische, allseitige Abschirmung des Steckverbinders bzw. seines Steckverbinderplatzes und seines zugehörigen Kabelanschlußbereichs eine elektromagnetische Abstrahlung, insbesondere von hochfrequenter Energie, an den offen liegenden Kabeladern und Kontakten im Kabelanschlußbereich und im Steckverbinderbereich sicher abgefangen bzw. abgeschirmt wird. Hierdurch wird eine Unterdrückung von elektromagnetischer Abstrahlung in die räumliche Umgebung der Steckdose ermöglicht, wodurch Störungen von Geräten in der Umgebung der Steckdose vermieden werden.

Die Abschirmung umfaßt vorzugsweise eine Schirmhaube, die an einer Rückseite der Steckdose angeordnet ist und die gesamte Steckdose an der Rückseite umschließt. Die Schirmhaube ermöglicht somit eine sichere und aufwandsparende Abschirmung insbesondere des Steckverbinders und des Kabelanschlußbereichs an der Rückseite der Steckdose.

Vorzugsweise ist ein Einsatz in der Steckdose angeordnet, in den der Steckverbinder durch ihre Öffnung einsetzbar ist, wobei sich der Einsatz innerhalb der Abschirmung befindet. Der Einsatz ermöglicht, wie beim erfindungsgemäßen Patchpanel, eine exakte Zentrierung, Halterung, Isolierung, wenn ein Kunststoffeinsatz verwendet wird, und eine formschlüssige Anordnung des Steckverbinders in der Steckdose. Weiterhin trägt der Einsatz zur modularen Bestückbarkeit der Steckdose bei.

Der Steckverbinder ist bevorzugt durch eine Rastverbindung im Einsatz festgehalten, wodurch eine Steckbarkeit des Steckverbinders in der Steckdose ermöglicht wird.

Vorzugsweise ist ein Blechbiegeteil als Teil der Abschirmung in der Steckdose vorgesehen, um auch eine vorderseitige Abschirmung, insbesondere des Kabelanschlußbereichs in der Öffnung der Steckdose sicherzustellen.

Das Blechbiegeteil ist bevorzugt mittels einer Rastverbindung an der Steckdose befestigt, um insbesondere eine Steckbarkeit des Blechbiegeteils zu erreichen.

Vorzugsweise ist das Blechbiegeteil von der Vorderseite der Steckdose her in die Steckdose einsetzbar, um eine aufwandsparende Montage der Steckdose nach Modulart zu erreichen.

Das Blechbiegeteil hat vorzugsweise eine Einrichtung, beispielsweise eine Kabelschelle oder einen Kabelbinder, um ein Sichern eines Kabels an dem Blechbiegeteil bzw. an der Steckdose im Kabelanschlußbereich noch innerhalb der Abschirmung bereitzustellen.

Vorzugsweise hat der Steckverbinder mindestens eine zugängliche Steckerbuchse zur Aufnahme eines (Gegen)Steckers an der Vorderseite der Steckdose und eine Klemmleiste an der Rückseite der Steckdose zum Befestigen der Adern eines Kabels im Kabelanschlußbereich, um den Steckverbinder vielseitig verwendbar zu machen.

Vorzugsweise ist die Steckdose als Unterputzdose ausgelegt, um entsprechend sicher einsetzbar zu sein.

Der erfindungsgemäße Steckverbinder (siehe Anspruch 21) zur Verwendung in einem Patchpanel gemäß einem der Ansprüche 1 bis 10 und/oder in einer Steckdose gemäß einem der Ansprüche 11 bis 20 umfaßt mindestens eine zugängliche Steckerbuchse zur Aufnahme eines (Gegen)Steckers an einer Vorderseite des Steckverbinders, eine Klemmleiste oder Kontaktiereinrichtung an einer Rückseite des Steckverbinders zum Befestigen der Adern eines Kabels und ein elektromagnetisches Schirmblech.

Der erfindungsgemäße Steckverbinder hat den Vorteil, daß das Schirmblech eine Kontaktierung mit der Abschirmung beispielsweise des Patchpanels oder der Steckdose mit geringem Übergangswiderstand bereitstellt.

Vorzugsweise hat der erfindungsgemäße Steckverbinder ein Rastmittel zur steckbaren Befestigung des Steckverbinders beispielsweise in dem Patchpanel oder der Steckdose.

Der erfindungsgemäße Steckverbinder hat vorzugsweise ein Buchsenteil mit mindestens einer Steckerbuchse und ein Klemmleistenteil mit der Klemmleiste, wobei das Buchsenteil und das Klemmleistenteil als zusammensteckbare und trennbare Teile ausgelegt sind. Die zweiteilige Auslegung des erfindungsgemäßen Steckverbinders hat den Vorteil einer einfachen Montage des Steckverbinders selbst und der aufwandsparenden und modulartigen Befestigung des Steckverbinders an dem Patchpanel oder einer Steckdose.

Vorzugsweise sind Rastmittel am Klemmleistenteil und/oder dem Buchsenteil ausgebildet, um eine steckbare Befestigung des Steckverbinders und auch seiner Einzelteile an dem Patchpanel und/oder der Steckdose zu ermöglichen.

Vorzugsweise ist das Schirmblech am Buchsenteil befestigt, um eine kompakte Bauweise zu erreichen.

Das erfindungsgemäße System (siehe Anspruch 26) zum Bereitstellen einer elektrischen Verbindung zum Übertragen von Daten umfaßt ein erstes Kabel, das mehrere elektrisch leitende Adern hat, eine Steckdose mit mindestens einem Steckverbinder, der durch eine Öffnung an einer Vorderseite der Steckdose zugänglich in der Steckdose zum Einstecken eines Gegensteckverbinders befestigt ist, wobei im Innern der Steckdose ein Kabelanschlußbereich vorgesehen ist und wobei der Steckverbinder und der Kabelanschlußbereich von einer elektromagnetischen Abschirmung allseitig umschlossen ist, wobei die Adern des ersten Kabels im Kabelanschlußbereich der Steckdose mit dem Steckverbinder verbunden sind, ein zweites Kabel mit mehreren elektrisch leitenden Adern und mit einem Gegensteckverbinder, der in den Steckverbinder der Steckdose vorderseitig eingesteckt ist, ein Patchpanel, das eine Vorderseite, eine Rückseite, mehrere Öffnungen und ein oder mehrere Steckverbinder aufweist, die jeweils über eine der Öffnungen von der Vorderseite des Patchpanels her zugänglich am Patchpanel zum Einstecken eines Gegensteckverbinders befestigt sind, wobei jedem der Steckverbinder ein Kabelanschlußbereich an der Rückseite des Patchpanels zugeordnet ist und wobei jeder der Steckverbinder und sein Kabelanschlußbereich von einer elektromagnetischen Abschirmung allseitig umschlossen ist und wobei die Adern des zweiten Kabels mit einem der Steckverbinder des Patchpanels im Kabelanschlußbereich des Steckverbinders verbunden ist oder ein zweiter Gegensteckverbinder des zweiten Kabels in einen Steckverbinder an der Vorderseite des Patchpanels eingesteckt ist.

Das erfindungsgemäße System umfaßt die vorstehend erläuterten erfindungsgemäßen Komponenten wie Patchpanel, Steckdose und Steckverbinder und weist folglich auch ihre Vorteile in Summe auf. Somit stellt das erfindungsgemäße System einen Link für die Übertragung von Daten mit hohen Datenraten bereit, wobei eine elektromagnetische Abstrahlung, insbesondere von hochfrequenter Energie, an den offen liegenden Kabeladern und Kontakten im Kabelanschlußbereich und im Steckverbinderbereich des Links durch die Abschirmungen der Systemkomponenten abgefangen oder abgeschirmt wird. Aufgrund der durch die Abschirmungen erreichten Trennung zu benachbarten Kabelanschluß- und Steckverbinderbereichen wird eine störende Übersprecheinkopplung in benachbarte Kabel, Kabelanschlußbereiche, Kontakte und Steckverbinder des Systems vermieden oder doch zumindest stark unterdrückt. Die elektrischen Signale in Kabeln des erfindungsgemäßen Systems sind folglich störungsfreier und können damit über eine weite bzw. weitere Strecke übertragen werden als es im Stand der Technik der Fall war. Die vorteilhaften Abschirmungen der Systemkomponenten ermöglichen weiterhin eine Unterdrückung von elektromagnetischer Abstrahlung in die räumliche Umgebung des Systems, wodurch Störungen von Geräten in der Umgebung des Systems vermieden werden.

Vorzugsweise haben die Steckverbinder und die zugehörigen Einsätze des Patchpanels und der Steckverbinder und der Einsatz der Steckdose den gleichen Aufbau, wodurch ein weitgehender modularer Aufbau und eine Komponentenaustauschbarkeit des Patchpanels und der Steckdose ermöglicht wird.

Weitere Vorteile, vorteilhafte Weiterbildungen und Anwendungsmöglichkeiten der vorliegenden Erfindung sind der nachfolgenden Beschreibung von Ausführungsformen der Erfindung in Verbindung mit den beiliegenden Zeichnungen zu entnehmen. Es zeigen:
- Figur 1: eine Frontalansicht einer Ausführungsform des erfindungsgemäßen Patchpanels zur Verwendung in einer Ausführungsform des erfindungsgemäßen Systems;
- Figur 2: eine Draufsicht auf das erfindungsgemäße Patchpanel gemäß der Figur 1 in Richtung des Pfeiles II in Figur 1 gesehen, jedoch ohne Frontplatte;
- Figur 3: eine perspektivische Ansicht eines Details, nämlich einer Abschirmkappe, des Patchpanels der Figuren 1 und 2;
- Figur 4: eine seitliche Ansicht eines Steckverbinders zur Verwendung in der Ausführungsform in dem erfindungsgemäßen System;
- Figur 5: eine Querschnittsansicht durch das Patchpanel der Figuren 1 bis 3, entlang der Schnittlinie V der Figur 2 gesehen, mit einer eingezeichneten Abschirmkappe der Figur 3;
- Figur 6: eine Detailansicht (nämlich eines Einsatzes des Patchpanels der Figur 5) in Richtung des Pfeiles VI in Figur 5 gesehen;
- Figur 7: eine weitere Detailansicht, teilweise im Querschnitt, nämlich des Einsatzes der Figur 6 mit eingesetztem Steckverbinder der Figur 4, in Richtung des Pfeiles VI der Figur 6 gesehen;
- Figur 8: eine teilweise Querschnittsansicht einer Ausführungsform der erfindungsgemäßen Steckdose zur Verwendung in dem erfindungsgemäßen System mit eingezeichnetem Steckverbinder der Figur 4 und angeschlossenem Kabelendabschnitt; und
- Figur 9: eine Rückenansicht der Steckdose der Figur 8 in Richtung des Pfeiles IX der Figur 8 gesehen, jedoch ohne Steckverbinder.

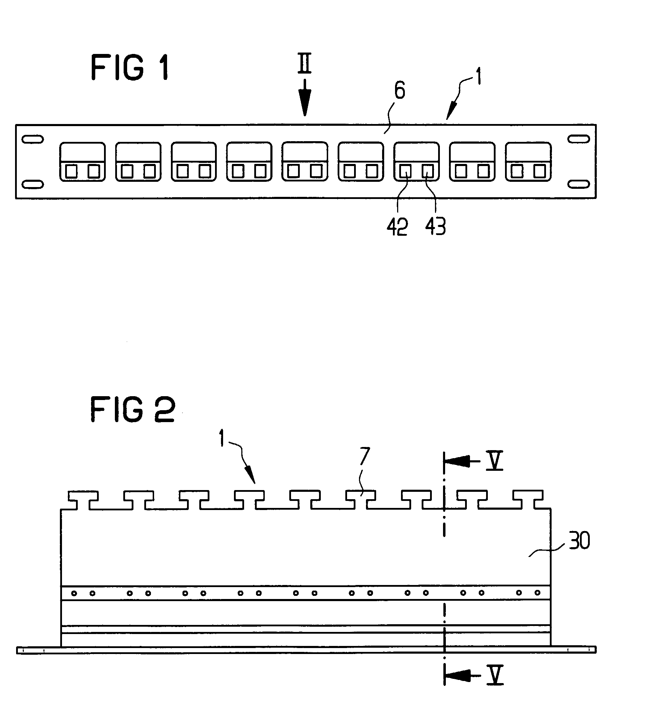

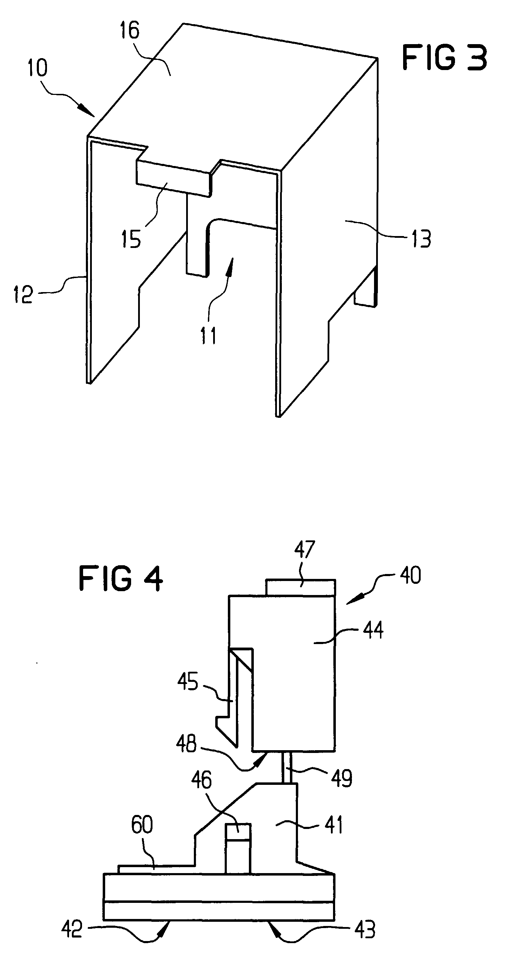

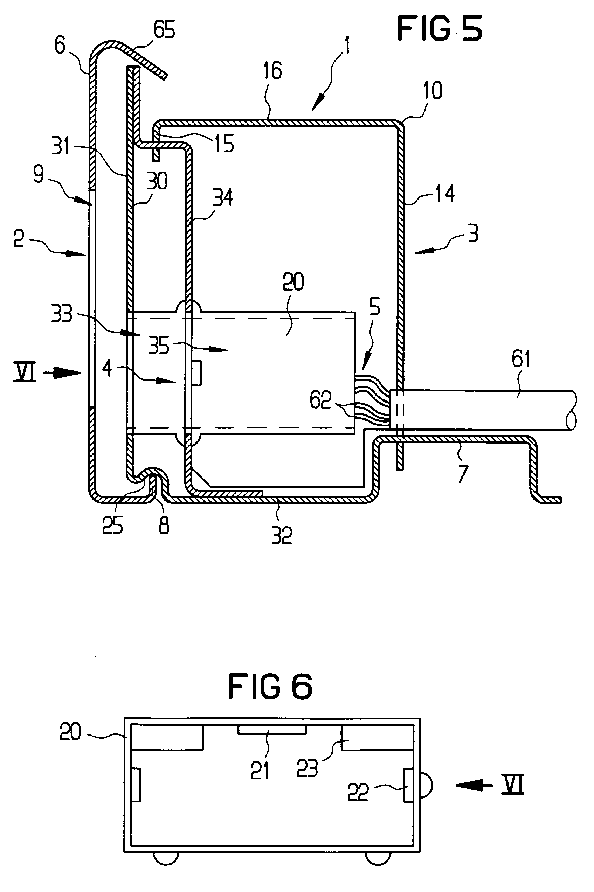

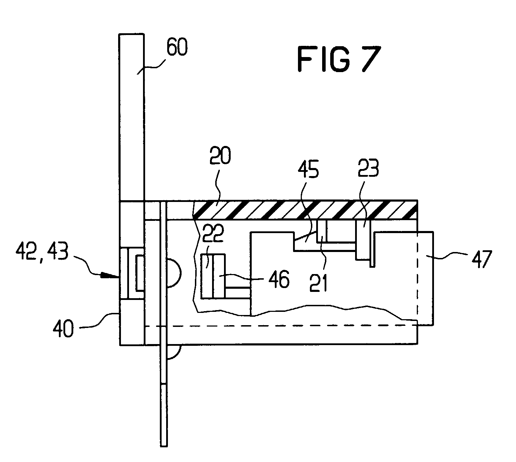

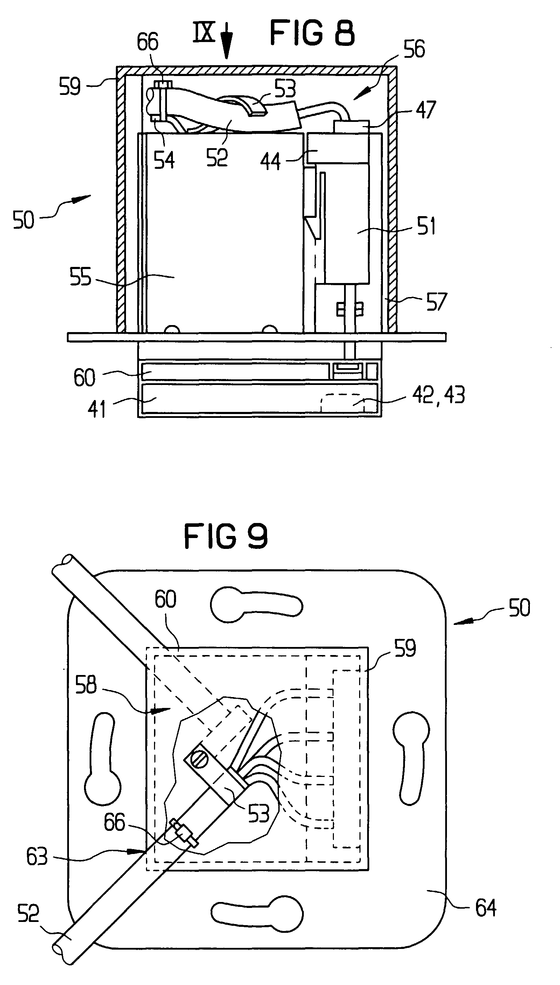

Eine Ausführungsform des erfindungsgemäßen Systems umfaßt zumindest ein erfindungsgemäßes Patchpanel 1 (siehe Figuren 1 bis 3 und Figuren 5 bis 7) mit mindestens einem erfindungsgemäßen Steckverbinder 40 (siehe Figur 4), eine erfindungsgemäße Steckdose 50 mit einem Steckverbinder 51 (siehe Figuren 8 und 9), ein erstes Datenkabel 52, dessen Adern innerhalb eines Kabelanschlußbereichs 56 der Steckdose 50 mit dem Steckverbinder 51 verbunden sind, und ein zweites Datenkabel 61 (siehe Figur 5), das den Steckverbinder 51 der Steckdose 50 mit dem Steckverbinder 40 des Patchpanels 1 verbindet. Das zweite Datenkabel 61 hat an einem Ende einen Gegenstecker (nicht gezeigt), der in eine Buchse 42, 43 des Steckverbinders 51 der Steckdose 50 einpaßt und ist am anderen Ende mit seinen vom Kabelmantel befreiten Adern in einem Kabelanschlußbereich 5 des Patchpanels 1 mit dem Steckverbinder 40 des Patchpanels 1 kontaktiert. Die Steckverbinder 51 und 40 haben identischen Aufbau.

Das Patchpanel 1 der Figuren 1 bis 7 umfaßt ein Winkelblechteil 30, eine Frontplatte 6, die am Winkel-Blechteil 30 befestigt ist, einen oder mehrere Steckverbinder 40, die nebeneinander in Reihe im Patchpanel 1 an entsprechenden Steckverbinderplätzen angeordnet sind und eine der Anzahl der eingebauten Steckverbinder 40 entsprechende Anzahl von einzelnen Abschirmkappen 10, von denen eine im Detail in der Figur 3 gezeigt ist. Das langgestreckte und durchgehend ausgebildete Winkel-Blechteil 30 ist als Blechbiegeteil ausgelegt und hat ein vertikal sich erstreckendes Frontteil 31 und ein sich horizontal erstreckendes Basisteil 32.

Das Frontteil 31 hat eine Frontteilöffnung 33 pro Steckverbinder 40, die zu einer Vorderseite 2 des Patchpanels 1 hin offen ist bzw. von der Vorderseite 2 des Patchpanels 1 zugänglich ist. Das Basisteil 32 des einstückigen Winkel-Blechteils 30 schließt das Patchpanel 1 nach unten hin vollständig ab und hat mehrere fortsatzartig ausgebildete Kabelträger 7, deren Anzahl der Anzahl der vorgesehenen Steckverbinderplätze des Patchpanels 1 entspricht, also neun Kabelträger 7 gemäß der gezeigten Ausführungsform. Auf dem Kabelträger 7 liegt das jeweilige Ende des Datenkabels 61 zumindest für ein Stück auf, um ein Abknicken des Datenkabels 61 zumindest im Kabelanschlußbereich 5 des Patchpanels 1 zu vermeiden. Rückseitig am Frontteil 31 ist ein Verstärkungsteil 34 am Frontteil 31 und am Basisteil 32 befestigt, das zur Stabilisierung des Winkel-Blechteils 30 dient. Das Verstärkungsteil 34 hat eine Öffnung 35, die mit der Öffnung 33 des Frontteils fluchtend ausgerichtet ist.

In die Öffnungen 33 und 35 ist ein Einsatz 20 von der Vorderseite 2 des Patchpanels 1 her eingeführt. Der Einsatz 20 besteht aus Kunststoff und hat innen oberseitig eine Rastnase 21, Anschläge 23 und innen seitlich an der Wandung zwei gegenüber liegende Rastnasen 22. Der Einsatz 20 ist vorderseitig und rückseitig offen und ist zur Aufnahme des Steckverbinders 40 vorgesehen. Pro Steckplatz ist wiederum ein Einsatz 20 eingeführt.

An der Vorderseite 2 des Patchpanels 1 ist die Frontplatte 6 mittels einer Rastverbindung befestigt, wobei die Frontplatte 6 mit einem Haken 65 das Frontteil 31 des Winkel-Blechteils 30 oberseitig umfaßt und die Frontplatte 6 mit einer Rastnase 8 in eine Rastvertiefung 25 des Winkel-Blechteils 30 eingreift. Die Frontplatte 6 hat wiederum eine Frontplattenöffnung 9 pro Steckverbinder Platz, die jedoch gegenüber den Öffnungen 33 und 35 etwas versetzt ist, damit bei angebrachter Frontplatte 6 ein Druck auf die Steckverbinder 40 ausgeübt wird.

In den Einsätzen 20 ist jeweils ein Steckverbinder 40 unterbringbar. Der Steckverbinder 40 umfaßt ein Buchsenteil 41 und ein Klemmleistenteil 44, die zusammensteckbar und trennbar voneinander ausgelegt sind.

Das Buchsenteil 41 hat vorderseitig zwei nebeneinander liegende, gleich große Steckerbuchsen 42 und 43, in die entsprechende Gegenstecker von Kabeln einpassen. Am Gehäuse des Buchsenteils 41 ist ein Schirmblech 60 angebracht, das bei in den Einsatz 20 eingestecktem Steckverbinder 40 gegen die Vorderseite des Frontteils 31 des Winkel-Blechteils 30 gepreßt ist, um einen sicheren Massekontakt mit dem Winkel-Blechteil 30 herzustellen. Das Buchsenteil 41 hat eine rückseitig abstehende Leiterplatte 49 auf der die Kontakte des Buchsenteils 41 freiliegend ausgebildet sind. Das Buchsenteil 41 hat weiterhin Rastfedern 46 die bei eingestecktem Steckverbinder 40 eine Rastverbindung mit den Rastnasen 22 des Einsatzes 20 herstellen. Das Buchsenteil 41 kann beispielsweise als SML-Einsatz ausgelegt sein.

Das Klemmleistenteil 44 hat vorderseitig eine Buchse 48, in die die Leiterplatte 49 steckbar einpaßt, und hat rückseitig eine Klemmleiste 47 mit nebeneinander liegenden Klemmkontakten, die in der Buchse 48 innerhalb des Klemmleistenteils 44 fortgesetzt sind, um mit entsprechenden Kontakten der Leiterplatte 49 des Buchsenteils 41 zu kontaktieren, wodurch insgesamt eine durchgehende, elektrisch leitende Verbindung zwischen einem Kontakt der Klemmleiste 47 und einem Kontakt innerhalb der Steckerbuchse 42 bzw. 43 bereitgestellt ist. Die Adern 62 des Datenkabels 61 sind in die Klemmkontakte der Klemmleiste 47 eingehakt und werden mittels eines Klemmteils der Klemmleiste 47 festgehalten, das den erforderlichen Kontaktdruck aufbringt. Am Klemmleistenteil 44 ist eine Rastfeder 45 ausgebildet, die bei in den Einsatz 20 untergebrachtem Steckverbinder 40 zusammen mit der Rastnase 21 des Einsatzes 20 und den Anschlägen 23 für das Klemmleistenteil 44 eine sichere Rastverbindung bildet. Das Klemmleistenteil 44 kann als EDGE-Kontakt ausgelegt sein.

Rückseitig an dem Einsatz 20 bzw. dem darin eingesetzten Steckverbinder 40 ist ein Kabelanschlußbereich 5 vorgesehen, in dem sich das Datenkabel 61 mit seinem Ende zumindest für ein Stück oder einem Abschnitt erstreckt und in dem die Adern 62 des Datenkabels 61 an der Klemmleiste 47 des Steckverbinders 40 befestigt sind. Das Datenkabel 61 ist beispielsweise mittels einer Kabelschelle (in der Figur 5 nicht gezeigt) an dem Kabelträger 7 befestigt. Ein Metallschirm des Datenkabels 61 ist ebenfalls innerhalb des Kabelanschlußbereichs 5 mit dem Winkel-Blechteil 30 verbunden.

Rückseitig am Patchpanel 1 ist der Einsatz 20 und der zugehörige Kabelanschlußbereich 5 mittels der Abschirmkappe 10 abgeschirmt, die sich gegenüber liegende Seitenwände 12 und 13, eine Dachwand 16 und eine Rückwand 14 umfaßt und mit einem Haken 15 in einer zugehörigen Öse am Winkel-Blechteil 30 bzw. am Verstärkungsteil 34 oberseitig zur Befestigung eingreift. Der Steckverbinder 40 und der zugehörige Kabelanschlußbereich 5 sind damit allseitig von metallenen Schirmwänden der Abschirmkappe 10 und des Winkel-Blechteils 30 umschlossen, wobei der Zugang zu den Steckerbuchsen 42, 43 des Steckverbinders 40 freiliegt. Im Kabelanschlußbereich 5 auftretende elektromagnetische Hochfrequenzabstrahlung kann aufgrund der allseitigen Abschirmung mittels der Abschirmkappe 10 und des Winkel-Blechteils 30 nicht mehr zu benachbarten Steckverbindern 40 gelangen, wodurch eine Nebensprechdämpfung oder damit verbundene Störungen vermieden werden. Am Patchpanel 1 können somit gemäß der vorliegenden Ausführungsform maximal neun Steckverbinderplätze bestückt und entsprechend viele Abschirmkappen 10 modular eingerichtet werden. Ein sicherer Massekontakt mit geringem Übergangswiderstand zwischen den Abschirmkappen 10 und dem durchgehenden Winkel-Blechteil 30 kann beispielsweise durch Befestigungstifte und Klammern hergestellt werden. Das Patchpanel 1 ist als Einschub in einen 19-Zoll-Platz eines entsprechenden 19-Zoll-Schrankes ausgelegt.

Alle Metallteile des Patchpanels 1, also die Frontplatte 6, das Winkel-Blechteil 30, das Verstärkungsteil 34 und die Abschirmkappen 10 bestehen aus Edelstahl, beispielsweise X Cr 17 oder X6 Cr 17 (Remanit) mit einer besonders glatt gewalzten Oberfläche, damit zusätzliche Übergangswiderstände durch Vertiefungen des Werksstoffs, eine rauhe Oberfläche oder sonstige ungünstige Oberflächenbehandlungen vermieden sind.

Die Montage des Patchpanels 1 wird nachfolgend anhand eines Steckverbinders 40 erläutert. Der Einsatz 20 wird von der Vorderseite 2 des Patchpanels 1 durch die Öffnung 4 und die Öffnungen 33 und 35 eingesetzt. Danach werden die Adern 62 des Datenkabels 61 an der Klemmleiste 47 des Klemmleistenteils 44 innerhalb des Kabelanschlußbereichs 5 angeklemmt. Danach wird an der Rückseite 3 des Patchpanels 1 das Klemmleistenteil 44 des Steckverbinders 40 rückseitig in den Einsatz 20 eingeschoben, bis die Rastfeder 45 in die Rastnase 21 des Einsatzes 20 einrastet und das Klemmleistenteil 44 an den Anschlägen 23 des Einsatzes 20 anschlägt. Das Kabel 61 wird auf dem Kabelträger 7 mittels Kabelschelle befestigt. Die Abschirmkappe 10 wird mittels ihres Hakens 15 an der Rückseite 3 des Patchpanels 1 eingehängt und kommt dabei mit ihrer Rückwand 14 zumindest teilweise auf dem Kabelträger 7 zum Aufliegen. Das Datenkabel 61 erstreckt sich dabei durch eine Kappenöffnung 11, die in der Rückwand 14 der Abschirmkappe 10 ausgebildet ist. Von der Vorderseite 2 des Patchpanels 1 her wird dann das Buchsenteil 41 des Steckverbinders 40 in den Einsatz 20 eingeführt, wobei die Leiterplatte 49 in die Buchse 48 des Klemmleistenteils 41 eingesteckt wird, bis die Rastfedern 46 des Buchsenteils 41 mit den Rastnasen 22 des Einsatzes 20 eine Rastverbindung herstellen. Das Schirmblech 60 des Steckverbinders 40 wird dabei gegen die Vorderseite des Frontteils 31 des Winkel-Blechteils 30 gepreßt um einen Kontakt zwischen dem Winkel-Blechteil 30 und dem Schirmblech 60, also dem Steckverbinder 40 einzurichten. Danach wird die Frontplatte 6 an der Vorderseite des Patchpanels 1 mittels der Rastverbindung aus Rastvertiefung 25 und Rastnase 8 angebracht, wodurch ein zusätzlicher Druck von der Frontplatte 6 auf die Vorderseite des Steckverbinders 40 ausgeübt wird. In die Steckerbuchsen 42, 43 können nun Kabel mit entsprechenden Gegensteckern bzw. Steckern eingesteckt werden, um weitere Verbindungen herzustellen.

Die erfindungsgemäße Steckdose 50 ist beispielsweise als Unterputzdose zur Wandmontage mit Unterputzrahmen 64 ausgebildet und umfaßt im wesentlichen den Steckverbinder 51, der identisch zu dem Steckverbinder 40 ist, einen Kunststoffeinsatz 57, der identisch zu dem Einsatz 20 des Patchpanels 1 ist, ein Blechbiegeteil 55 und eine Schirmhaube 59, die rückseitig an der Steckdose 50 angeordnet ist und den Steckverbinder 51, einen Kabelanschlußbereich 56, der rückseitig innerhalb der Schirmhaube 59 vorgesehen ist, und das Blechbiegeteil 55 rückseitig umschließt. Die Schirmhaube 59 und das Blechbiegeteil 55, das den an den Kabelanschlußbereich 56 und an den Einsatz 57 angrenzenden Innenraum der Steckdose 50 bis auf die Höhe des Unterputzrahmens 64 belegt, bilden die Abschirmung der Steckdose 50. Im Kabelanschlußbereich 56 ist das erste Datenkabel 52 mit seinen Adern an der Klemmleiste 47 des Steckverbinders 51 angeklemmt, wobei das Datenkabel 52 mit einer Kabelschelle 53 an der Rückseite des Blechbiegeteils 55 gesichert ist. Mit einem Kabelbinder 66 ist das erste Datenkabel 52 zusätzlich an einer Befestigungsnase 54 des Blechbiegeteils 55 zugentlastet gesichert. Das Blechbiegeteil 55 und der Einsatz 57 sind durch die Öffnung 58 der Steckdose 50 einsetzbar, wobei Rastverbindungen das Blechbiegeteil 55 und den Einsatz 57 am Unterputzrahmen 64 festhalten. Die Schirmhaube 59 ist beispielsweise mittels Klammern, Stiften oder Schrauben uund dergleichen oder auch formschlüssig an dem Unterputzrahmen 64 befestigt. Bei eingerastetem Steckverbinder 51 ist das Schirmblech 60 des Steckverbinders 51 gegen das Blechbiegeteil 55 zur Kontaktvermittlung angepreßt. Die Metallteile der Steckdose 50, das heißt das Blechbiegeteil 55 und die Schirmhaube 59, bestehen wiederum aus dem zuvor im Zusammenhang mit dem Patchpanel 1 erwähnten Edelstahl mit glatt gewalzter Oberfläche. An der Schirmhaube 59 ist in einem Kantenbereich eine Durchführöffnung 63 für das Kabel 52 vorgesehen. Zusätzlich kann eine zweite Durchführöffnung in der Schirmhaube 59 ausgebildet sein.

### Bezugszeichenliste

- 1: Patchpanel
- 2: Vorderseite
- 3: Rückseite
- 4: Öffnung
- 5: Kabelanschlußbereich
- 6: Frontplatte
- 7: Kabelträger
- 8: Rastnase
- 9: Frontplattenöffnung
- 10: Abschirmkappe
- 11: Kappenöffnung
- 12, 13: Seitenwand
- 14: Rückwand
- 15: Haken
- 16: Dachwand
- 20: Einsatz
- 21, 22: Rastnase
- 23: Anschlag
- 25: Rastvertiefung
- 30: Winkel-Blechteil
- 31: Frontteil
- 32: Basisteil
- 33: Frontteilöffnung
- 34: Verstärkungsteil
- 35: Öffnung des Verstärkungsteils
- 40: Steckverbinder
- 41: Buchsenteil
- 42,43: Steckerbuchse
- 44: Klemmleistenteil
- 45, 46: Rastfeder
- 47: Klemmleiste
- 48: Buchse
- 49: Leiterplatte
- 50: Steckdose
- 51: Steckverbinder
- 52: erstes Datenkabel
- 53: Kabelschelle
- 54: Befestigungsnase
- 55: Blechbiegeteil
- 56: Kabelanschlußbereich
- 57: Einsatz
- 58: Öffnung der Steckdose
- 59: Schirmhaube
- 60: Schirmblech
- 61: zweites Datenkabel
- 62: Ader
- 63: Durchführöffnung
- 64: Unterputzrahmen
- 65: Haken
- 66: Kabelbinder

## Patentansprüche

1. Patchpanel zum Verbinden von Kabeln, wobei das Patchpanel (1) eine Vorderseite (2), eine Rückseite (3), mehrere Öffnungen (4) und einen oder mehrere Steckverbinder (40) aufweist, die jeweils über eine der Öffnungen (4) von der Vorderseite (2) des Patchpanels (1) her zugänglich am Patchpanel (1) zum Einstecken eines Gegensteckverbinders befestigt sind, wobei jedem der Steckverbinder (40) ein Kabelanschlußbereich (5) an der Rückseite (3) des Patchpanels (1) zugeordnet ist und wobei jeder der Steckverbinder (40) und sein Kabelanschlußbereich (5) von einer elektromagnetischen Abschirmung allseitig umschlossen ist.

2. Patchpanel nach Anspruch 1, dadurch gekennzeichnet, daß die Abschirmung eine oder mehrere Abschirmkappen (10) hat, die jeweils einen Steckverbinder (40) und seinen zugehörigen Kabelanschlußbereich (5) umschließen.

3. Patchpanel nach Anspruch 1 oder Anspruch 2, dadurch gekennzeichnet, daß in jeder Öffnung (4) ein Einsatz (20)angeordnet ist, in dem jeweils ein Steckverbinder (40) von der Vorderseite (2) des Patchpanels (1) her einsetzbar ist, wobei der Einsatz (20) innerhalb der Abschirmung angeordnet ist.

4. Patchpanel nach Anspruch 3, dadurch gekennzeichnet, daß jeder der Steckverbinder (40) durch eine Rastverbindung (21, 22, 23, 45, 46) im Einsatz (20) festgehalten ist.

5. Patchpanel nach einem der Ansprüche 1 bis 4, dadurch gekennzeichnet, daß das Patchpanel (1) ein Winkel-Blechteil (30) mit einem sich vertikal an der Vorderseite (2) des Patchpanels (1) erstreckenden Frontteil (31) und einem sich horizontal an der Rückseite (3) des Patchpanels (1) erstreckenden Basisteil (32) hat, wobei die Öffnungen (4) im Frontteil (31) ausgebildet sind und das Winkel-Blechteil (30) einen Teil der Abschirmung bildet.

6. Patchpanel nach Anspruch 5, dadurch gekennzeichnet, daß sich zwischen dem Frontteil (31) und dem Basisteil (32) ein Verstärkungsteil (34) an der Rückseite (3) des Patchpanels (1) zur Stabilisierung des Winkel-Blechteils (1) erstreckt.

7. Patchpanel nach einem der Ansprüche 1 bis 6, dadurch gekennzeichnet, daß eine Frontplatte (6) an dem Winkel-Blechteil (30) befestigt ist, die die Steckverbinder (40) an das Winkel-Blechteil (30) anpreßt.

8. Patchpanel nach Anspruch 7, dadurch gekennzeichnet, daß die Frontplatte (6) mittels einer Rastverbindung (8, 25) am Winkel-Blechteil (30) befestigt ist.

9. Patchpanel nach einem der vorstehenden Ansprüche, dadurch gekennzeichnet, daß das Patchpanel (1) an der Rückseite (3) mindestens einen Kabelträger (7) als Auflager für ein Kabel hat.

10. Patchpanel nach einem der vorstehenden Ansprüche, dadurch gekennzeichnet, daß der Steckverbinder (40) mindestens eine Steckerbuchse (42, 43) zur Aufnahme eines Steckers an der Vorderseite (2) des Patchpanels (1) und eine Klemmleiste (47) an der Rückseite (3) des Patchpanels (1) zum Befestigen der Adern eines Kabels im Kabelanschlußbereich (5) hat.

11. Steckdose mit mindestens einem Steckverbinder (51), der durch eine Öffnung (58) an einer Vorderseite der Steckdose (50) zugänglich in der Steckdose (50) zum Einstecken eines Gegensteckverbinders befestigt ist, wobei im Innern der Steckdose (50) ein Kabelanschlußbereich (56) vorgesehen ist und wobei der Steckverbinder (51) und der Kabelanschlußbereich (56) von einer elektromagnetischen Abschirmung allseitig umschlossen ist.

12. Steckdose nach Anspruch 11, dadurch gekennzeichnet, daß die Abschirmung eine Schirmhaube (59) hat, die an einer Rückseite der Steckdose (50) angeordnet ist.

13. Steckdose nach Anspruch 11 oder Anspruch 12, dadurch gekennzeichnet, daß ein Einsatz (57) in der Steckdose (50) angeordnet ist, in den der Steckverbinder (51) von der Vorderseite der Steckdose (50) her durch ihre Öffnung (58) einsetzbar ist, wobei sich der Einsatz (57) innerhalb der Abschirmung befindet.

14. Steckdose nach Anspruch 13, dadurch gekennzeichnet, daß der Steckverbinder (51) durch eine Rastverbindung im Einsatz (57) festgehalten ist.

15. Steckdose nach einem der Ansprüche 11 bis 14, dadurch gekennzeichnet, daß ein Blechbiegeteil (55) als Teil der Abschirmung in der Steckdose (50) vorgesehen ist.

16. Steckdose nach Anspruch 15, dadurch gekennzeichnet, daß das Blechbiegeteil (55) mittels einer Rastverbindung an der Steckdose (50) befestigt ist.

17. Steckdose nach Anspruch 15 oder Anspruch 16, dadurch gekennzeichnet, daß das Blechbiegeteil (55) von der Vorderseite der Steckdose (50) her in die Steckdose (50) einsetzbar ist.

18. Steckdose nach einem der Ansprüche 15 bis 17, dadurch gekennzeichnet, daß das Blechbiegeteil (55) eine Einrichtung (53, 66) zum Sichern eines Kabels an dem Blechbiegeteil (55) hat.

19. Steckdose nach einem der Ansprüche 11 bis 18, dadurch gekennzeichnet, daß der Steckverbinder (51) mindestens eine zugängliche Steckerbuchse (42, 43) zur Aufnahme eines (Gegen) Steckers an der Vorderseite der Steckdose (50) und eine Klemmleiste (47) an der Rückseite der Steckdose (50) zum Befestigen der Adern eines Kabels im Kabelanschlußbereich (56) hat.

20. Steckdose nach einem der Ansprüche 11 bis 19, dadurch gekennzeichnet, daß die Steckdose (50) als Unterputzdose ausgelegt ist.

21. Steckverbinder zur Verwendung in einem Patchpanel (1) gemäß einem der Ansprüche 1 bis 10 und/oder in einer Steckdose (50) gemäß einem der Ansprüche 11 bis 20, wobei der Steckverbinder (40, 51) mindestens eine zugängliche Steckerbuchse (42, 43) zur Aufnahme eines (Gegen)Steckers an einer Vorderseite des Steckverbinders (40, 51), eine Klemmleiste (47) an einer Rückseite des Steckverbinders (40, 51) zum Befestigen der Adern eines Kabels und ein Schirmblech (60) hat.

22. Steckverbinder nach Anspruch 21, dadurch gekennzeichnet, daß der Steckverbinder (40, 51) ein Rastmittel (45, 46) zur Befestigung des Steckverbinders hat.

23. Steckverbinder nach Anspruch 21 oder Anspruch 22, dadurch gekennzeichnet, daß der Steckverbinder (40, 51) ein Buchsenteil (41) mit mindestens einer Steckerbuchse (42, 43) und ein Klemmleistenteil (44) mit der Klemmleiste (47) hat, wobei das Buchsenteil (41) und das Klemmleistenteil (44) als zusammensteckbare und trennbare Teile ausgelegt sind.

24. Steckverbinder nach Anspruch 23, dadurch gekennzeichnet, daß das Schirmblech (60) am Buchsenteil befestigt ist.

25. Steckverbinder nach Anspruch 23 oder Anspruch 24, dadurch gekennzeichnet, daß das Rastmittel (45, 46) am Klemmleistenteil (44) und/oder am Buchsenteil (41) ausgebildet ist.

26. System zum Bereitstellen einer elektrischen Verbindung zum Übertragen von Daten mit
einem ersten Kabel (52), das mehrere elektrisch leitende Adern hat,
einer Steckdose (50) mit mindestens einem Steckverbinder (51), der durch eine Öffnung (58) an einer Vorderseite der Steckdose (50) zugänglich in der Steckdose(50) zum Einstecken eines Gegensteckverbinders befestigt ist, wobei im Innern der Steckdose (50) ein Kabelanschlußbereich (56) vorgesehen ist und wobei der Steckverbinder (51) und der Kabelanschlußbereich (56) von einer elektromagnetischen Abschirmung allseitig umschlossen ist, wobei die Adern des ersten Kabels (52) im Kabelanschlußbereich (56) der Steckdose (50) mit dem Steckverbinder (51) verbunden sind,
einem zweiten Kabel (61) mit mehreren elektrisch leitenden Adern (62) und mit einem Gegensteckverbinder, der in den Steckverbinder (51) der Steckdose (50) vorderseitig eingesteckt ist,
einem Patchpanel (1), das eine Vorderseite (2), eine Rückseite (3), mehrere Öffnungen (4) und einen oder mehrere Steckverbinder (40) aufweist, die jeweils über eine der Öffnungen (4) von der Vorderseite (2) des Patchpanels (1) her zugänglich am Patchpanel (1) zum Einstecken eines Gegensteckverbinders befestigt sind, wobei jedem der Steckverbinder (40) ein Kabelanschlußbereich (5) an der Rückseite (3) des Patchpanels (1) zugeordnet ist und wobei jeder der Steckverbinder (40) und sein Kabelanschlußbereich (5) von einer elektromagnetischen Abschirmung allseitig umschlossen ist,
wobei die Adern (62) des zweiten Kabels (61) mit einem der Steckverbinder (40) des Patchpanels (1) im Kabelanschlußbereich (5) des Steckverbinders (40) verbunden ist oder ein zweiter Gegensteckverbinder des zweiten Kabels (61) in einen Steckverbinder (40) an der Vorderseite (2) des Patchpanels (1) eingesteckt ist.

27. System nach Anspruch 1, dadurch gekennzeichnet, daß die Steckverbinder (40) des Patchpanels (1) und der Steckverbinder (51) der Steckdose (50) den gleichen Aufbau haben.

28. System nach Anspruch 1 oder Anspruch 2, gekennzeichnet durch ein Patchpanel (1) gemäß einem der Ansprüchen 1 bis 10.

29. System nach einem der Ansprüche 26 bis 28, gekennzeichnet durch eine Steckdose (50) gemäß einem der Ansprüche 11 bis 20.

30. System nach einem der Ansprüche 26 bis 29, gekennzeichnet durch einen Steckverbinder (40, 51) gemäß einem der Ansprüche 21 bis 25.
